# EUROPÄISCHE PATENTSCHRIFT

(11) **EP 1 172 054 B1**
(45) Veröffentlichungstag und Bekanntmachung des Hinweises auf die Patenterteilung: **03.03.2004**
(21) Anmeldenummer: 00115382.4
(22) Anmeldetag: 15.07.2000
(51) Int. Cl.: A47J 31/08

(54) **Verfahren zur Herstellung von tütenartigen Filterpapiereinsätzen**
Method for manufacturing a paper filter bag
Méthode de fabrication d'un cornet-filtre en papier

(43) Veröffentlichungstag der Anmeldung: 16.01.2002
(73) Patentinhaber: MELITTA HAUSHALTSPRODUKTE GmbH & Co. Kommanditgesellschaft, D-32427 Minden (DE)
(72) Erfinder: Müller, Georg, 32423 Minden (DE); Diekmeier, Manfred, 33739 Bielefeld (DE); Stratmann, Harald, 32369 Rahden (DE)
(74) Vertreter: Specht, Peter, Dipl.-Phys.

(56) Entgegenhaltungen:
- EP-A- 0 062 216
- DE-A- 2 929 251
- FR-A- 2 349 438
- FR-A- 2 537 055

## Beschreibung

Die vorliegende Erfindung betrifft ein Verfahren zur Herstellung von tütenartigen Filterpapiereinsätzen mit zwei übereinander liegenden Filterpapierlagen von etwa kegelstumpfartiger Grundfläche und bogenförmig verlaufender Einfüllöffnung, wobei eine der Filterpapierlagen im Bereich der Einfüllöffnung mit einer Öffnungshilfe in Form einer vorspringenden Öffnungslasche oder eines zurückspringenden Daumenausschnittes versehen ist und die Filterpapierlagen aus einem einstückigen und längs einer eine erste Seitenkante eines Filterpapiereinsatzes bildenden Faltkante zusammengefalteten Zuschnitt gebildet und danach längs einer Bodenkante und einer der Faltkante gegenüber liegenden zweiten Seitenkante miteinander verprägt werden und die einzelnen Filterpapiereinsätze aus einer fortlaufenden Filterpapierbahn in der vorstehend angegebenen Reihenfolge zusammengefügt und danach aus der Filterpapierbahn ausgeschnitten werden.

Ein solches Verfahren ist aus dem Dokument EP 0 062 216 bekannt.

Es ist bekannt, tütenartige Filterpapiereinsätze, die in dieser Form vorzugsweise zur Herstellung von Aromaauszügen aus Kaffee oder Tee in Verbindung mit entsprechenden Filtergefäßen verwendet werden, nach dem vorstehend angegebenen Verfahren herzustellen.

Bei den bisher angewandten Verfahren entsteht bei der Herstellung der Öffnungshilfe zusätzlicher Filterpapier-Abfall, der über entsprechende Maßnahmen entsorgt werden muß.

Hierdurch wird insgesamt die Wirtschaftlichkeit der Herstellung von tütenartigen Filterpapiereinsätzen mit Öffnungshilfen beeinträchtigt.

Der vorliegenden Erfindung liegt die Aufgabe zugrunde, ein Verfahren der gattungsgemäßen Art aufzuzeigen, mittels dessen eine äußerst unproblematische und wirtschaftliche Herstellung von tütenartigen Filterpapiereinsätzen mit Öffnungshilfen möglich ist.

Diese Aufgabe wird erfindungsgemäß dadurch gelöst, daß noch vor dem Zusammenfalten der Filterpapierbahn in einer ersten Schneidestation der den Bereich der Öffnungshilfe bildende Abschnitt der einen Filterpapierlage und ein entsprechender Bogenabschnitt der nach dem Falten der Filterpapierbahn dem Abschnitt mit der Öffnungshilfe gegenüber liegenden zweiten Filterpapierlage in die Filterpapierbahn abfallfrei eingeschnitten und nach dem Falten der Filterpapierbahn zum Anbringen der Prägungen jeder einzelne Filterpapiereinsatz in einer zweiten Schneidestation ausgeschnitten wird, wobei der dabei noch erforderliche bogenförmige Schnitt im Bereich der Einfüllöffnung den im Bereich der Öffnungshilfe schon vorhandenen Schnittverlauf kreuzt.

Das erfindungsgemäße Verfahren zeichnet sich insbesondere dadurch aus, daß während des Arbeitsprozesses bis zur endgültigen Fertigstellung eines Filterpapiereinsatzes kein Abfall anfällt, der separat entsorgt werden muß.

Jeder Filterpapiereinsatz wird erst zum Ende des Herstellungsprozesses vollständig aus der Filterpapierbahn ausgeschnitten, so wie dies auch bei Filterpapiereinsätzen der Fall ist, die keine Öffnungshilfen aufweisen. Der restliche Papierabfall wird dann in der üblichen und herkömmlichen Weise entsorgt.

Das erfindungsgemäße Verfahren wird unter Bezugnahme auf die beigefügten Zeichnungen im folgenden ausführlich beschrieben.

Im einzelnen zeigen:
- Figur 1: eine schematische Darstellung einer Filterpapierbahn, aus der Filterpapiereinsätze mit Öffnungshilfen hergestellt werden,
- Figur 2: eine schematisch dargestellte Draufsicht auf den Grundriß eines Filterpapiereinsatzes mit besonderer Hervorhebung von in einem ersten Verfahrensabschnitt hergestellten Einschnitten in eine Filterpapierbahn,
- Figur 3: eine der Figur 2 entsprechende Draufsicht unter besonderer Hervorhebung der im letzten Arbeitsschritt des Herstellverfahrens hergestellten Schnitte,
- Figur 4: eine Draufsicht auf einen nach dem erfindungsgemäßen Verfahren hergestellten Filterpapiereinsatz.

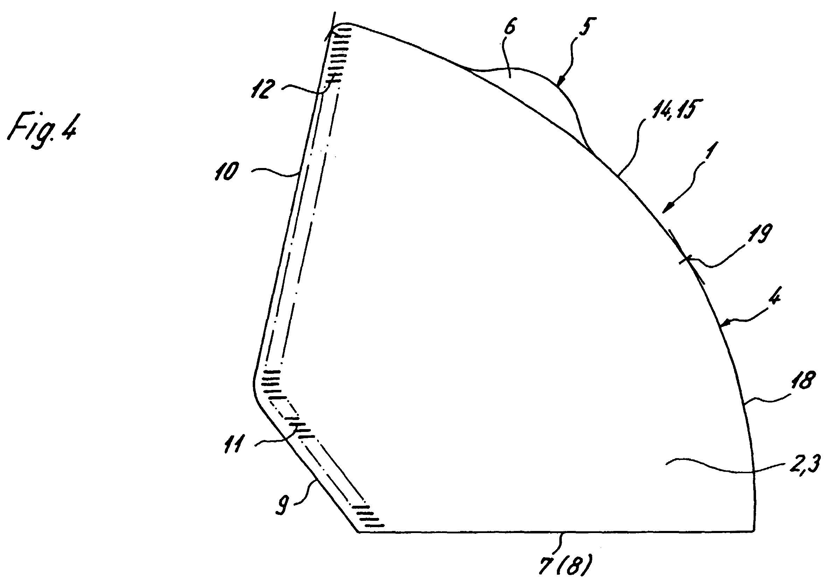

Die Erfindung hat ein Verfahren zur Herstellung von tütenartigen Filterpapiereinsätzen 1 zum Gegenstand, wobei ein derartiger Filterpapiereinsatz 1 in Figur 4 dargestellt ist.

Die herzustellenden Filterpapiereinsätze 1 bestehen im Endzustand aus zwei übereinander liegenden Filterpapierlagen 2 und 3 von etwa kegelstumpfartiger Grundfläche und bogenförmig verlaufender Einfüllöffnung 4.

Dabei ist im Bereich der Einfüllöffnung 4 eine Öffnungshilfe 5 vorgesehen, die im dargestellten Ausführungsbeispiel in Form einer vorspringenden Öffnungslasche 6 ausgebildet ist.

Alternativ hierzu kann die Öffnungshilfe 5 im Bereich einer der Papierlagen 2 auch durch einen entsprechend zurückspringenden Daumenausschnitt gebildet sein.

Die beiden Filterpapierlagen 2 und 3 sind aus einem einstückigen und längs einer eine erste Seitenkante 7 bildenden Faltkante 8 zusammengefaltet. Nach dem Zusammenfalten der beiden Filterpapierlagen 2 und 3 werden diese Filterpapierlagen 2 und 3 im Bereich einer Bodenkante 9 und einer der Faltkante 8 gegenüber liegenden zweiten Seitenkante 10 miteinander verprägt, wobei eine sogenannte Bodennaht 11 und eine sogenannte Seitennaht 12 entstehen.

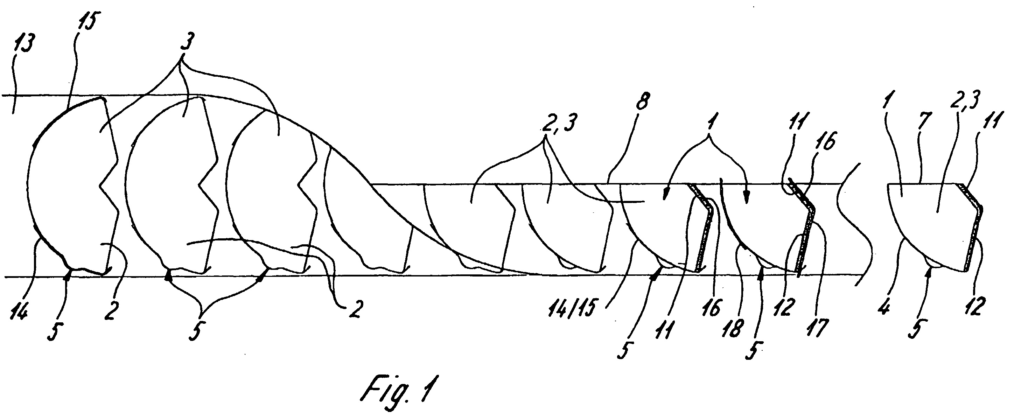

Die einzelnen Filterpapiereinsätze 1 werden in der vorstehend genannten Reihenfolge aus einer fortlaufenden Filterpapierbahn 13 (siehe Figur 1) hergestellt. Bei dem in Figur 1 dargestellten schematischen Ablauf wird ein Filterpapiereinsatz hergestellt, der mit einer Öffnungshilfe 5 in Form eines zurückspringenden Daumenausschnittes ausgestattet ist.

Unabhängig hiervon macht Figur 1 deutlich, daß in die Filterpapierbahn 13 vor dem Zusammenfalten in einer (nicht weiter dargestellten) ersten Schneidestation der den Bereich der Öffnungshilfe 5 bildende Abschnitt der einen Filterpapierlage 2 und ein entsprechender Bogenabschnitt, der nach dem Falten der Filterpapierbahn 13 dem Abschnitt mit der Öffnungshilfe 5 gegenüber liegenden zweiten Filterpapierlage 3 in die Filterpapierbahn 13 abfallfrei eingeschnitten wird, was durch die in Figur 1 durch stärkere Linien hervorgehobene Schnitte 14 und 15 angedeutet ist. Nachdem diese ersten Schnitte 14 und 15 abfallfrei in die Filterpapierbahn 13 eingebracht sind, wird diese in bekannter Weise um die Faltkante 8 zusammengefaltet. Danach werden die schon erwähnten Bodennähte 11 und die Seitennähte 12 angebracht und anschließend werden nun aus der zusammengefalteten Filterpapierbahn 13 in einer (ebenfalls nicht dargestellten) zweiten Schneidestation die einzelnen Filterpapiereinsätze 1 ausgeschnitten. Hierbei werden parallel zur Bodennaht 11 und zur Seitennaht 12 entsprechende Trennschnitte 16 und 17 ausgeführt und außerdem wird der noch erforderliche bogenförmige Schnitt 18 im Bereich der Einzelöffnung ausgeführt. Die Besonderheit dabei ist, daß dieser bogenförmige Schnitt 18 im Bereich der Einfüllöffnung 4 den schon vorhandenen Schnittverlauf der Schnitte 14 und 15 kreuzt, so daß eine einwandfreie und unproblematische Trennung im Bereich der Einzelöffnung 4 gewährleistet ist, ohne daß die Gefahr besteht, daß der bogenförmige Schnitt 18 in den Bereich der Öffnungshilfe oder des restlichen Abschnittes der bogenförmigen Einfüllöffnung 4 verläuft.

Durch die vorstehend beschriebene Abfolge der einzelnen Schnittvorgänge wird erreicht, daß aus einer zunächst einlagigen Filterpapierbahn 13 Filterpapiereinsätze 1 gefertigt werden können, die eine Öffnungshilfe 5 aufweisen und in der gleichen Arbeitsgeschwindigkeit hergestellt werden können, wie dies bei Filterpapiereinsätzen ohne Öffnungshilfe der Fall ist. Außerdem muß während des Arbeitsprozesses nicht zusätzlich Abfall entfernt werden, da erst nach dem vollständigen Ausschneiden der Filterpapiereinsätze 1 die Trennung von nutzbaren Filterpapiereinsätzen 1 und dem Abfall aus der Filterpapierbahn 13 erfolgt.

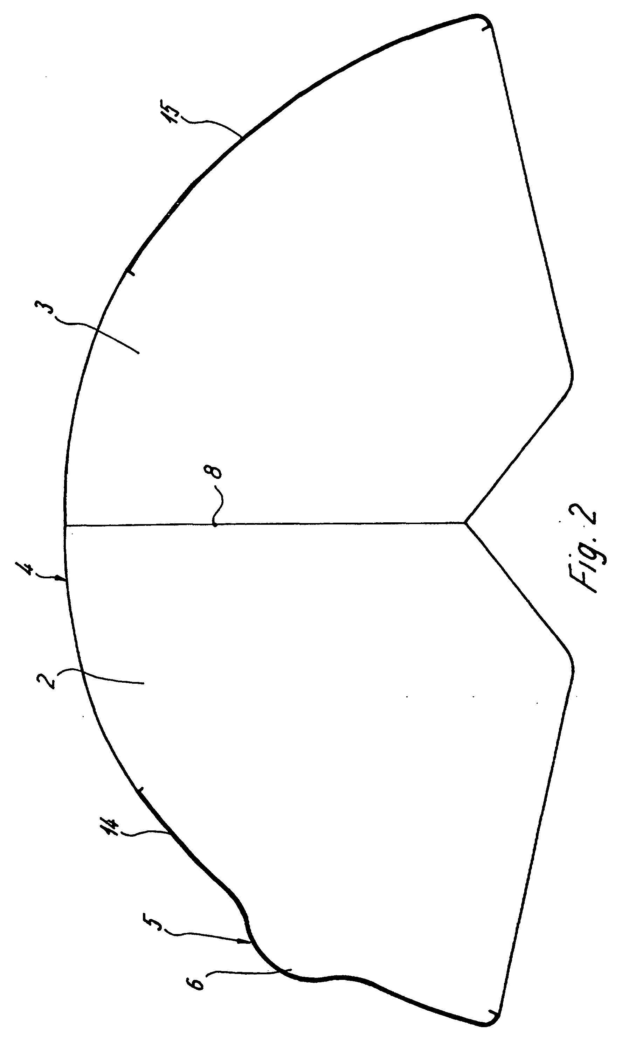

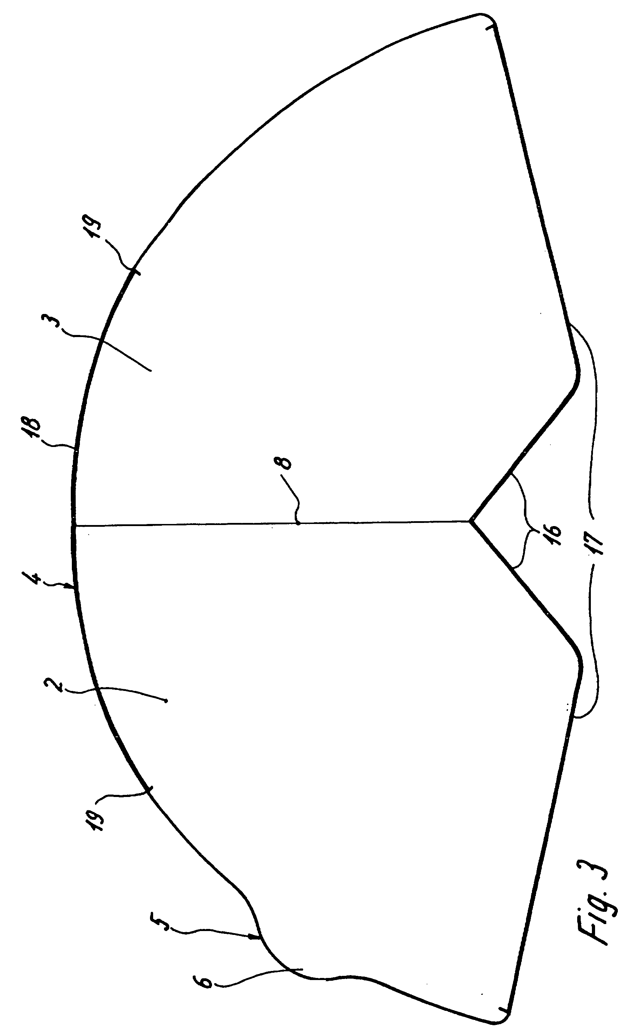

In den Figuren 2 und 3 sind die einzelnen Schnitte 14, 15, 16, 17 und 18 noch einmal durch verstärkt dargestellte Linienabschnitte hervorgehoben, wobei Figur 2 die Situation bei der noch nicht gefalteten Filterpapierbahn 13 charakterisiert, während Figur 3 den Verlauf der Schnitte 16, 17 und 18 zeigt, die allerdings erst nach dem Zusammenfalten der Filterpapierlagen 2 und 3 erfolgen.

Die Figuren 2 und 3 zeigen, wie die Figur 4 auch, deutlich, daß sich die Schnitte 14 und 15 einerseits sowie 18 andererseits in einem Kreuzungspunkt 19 kreuzen. Auch der Schnitt 17 kreuzt sich im Übergangsbereich zwischen der Seitenkante 10 und der bogenförmigen Einfüllöffnung 4 mit den Schnitten 14 und 15, so daß sich auch hier eine vollständige und problemlose Trennung jedes Filterpapiereinsatzes 1 aus der zusammengefalteten Filterpapierbahn 13 ergibt.

## Patentansprüche

1. Verfahren zur Herstellung von tütenartigen Filterpapiereinsätzen (1) mit zwei übereinander liegenden Filterpapierlagen (2, 3) von etwa kegelstumpfartiger Grundfläche und bogenförmig verlaufender Einfüllöffnung (4), wobei eine der Filterpapierlagen (2) im Bereich der Einfüllöffnung (4) mit einer Öffnungshilfe (5) in Form einer vorspringenden Öffnungslasche (6) oder eines zurückspringenden Daumenausschnittes versehen ist und die Filterpapierlagen (2, 3) aus einem einstückigen und längs einer eine erste Seitenkante (7) eines Filterpapiereinsatzes (1) bildenden Faltkante (8) zusammengefalteten Zuschnitt gebildet und danach längs einer Bodenkante (9) und einer der Faltkante (8) gegenüber liegenden zweiten Seitenkante (10) miteinander verprägt werden und die einzelnen Filterpapiereinsätze (1) aus einer fortlaufenden Filterpapierbahn (13) in der vorstehend angegebenen Reihenfolge zusammengefügt und danach aus der Filterpapierbahn (13) ausgeschnitten werden, **dadurch gekennzeichnet, daß** noch vor dem Zusammenfalten der Filterpapierbahn (13) in einer ersten Schneidestation der den Bereich der Öffnungshilfe (5) bildende Abschnitt der einen Filterpapierlage (2) und ein entsprechender Bogenabschnitt der nach dem Falten der Filterpapierbahn (13) den Abschnitt mit der Öffnungshilfe (5) gegenüber liegenden zweiten Filterpapierlage (3) in die Filterpapierbahn (13) abfallfrei eingeschnitten und nach dem Falten der Filterpapierbahn (13) sowie dem Anbringen der Prägungen jeder einzelne Filterpapiereinsatz (1) in einer zweiten Schneidestation ausgeschnitten wird, wobei der dabei noch erforderliche bogenförmige Schnitt (18) im Bereich der Einfüllöffnung (4) den im Bereich der Öffnungshilfe (5) schon vorhandenen Schnittverlauf (14,15) kreuzt.

## Claims

1. Process for producing bag-like filter paper inserts (1) having two filter paper layers (2, 3) of approximately frustoconical surface area located one above the other and an arcuate introduction opening (4), it being the case that one of the filter paper layers (2), in the region of the introduction opening (4), is provided with an opening aid (5) in the form of a projecting opening tab (6) or of a recessed thumb cutout, and the filter paper layers (2, 3) are formed from a single-piece blank, folded together along a folding edge (8) which forms a first side edge (7) of a filter paper insert (1), and then are connected to one another by stamping along a base edge (9) and a second side edge (10), which is located opposite the folding edge (8), and the individual filter paper inserts (1) are joined together, in the order indicated above, from a continuous filter paper web (13) and are then cut out of the filter paper web (13), **characterized in that** prior to the filter paper web (13) being folded together, in a first cutting station, that section of the one filter paper layer (2) which forms the region of the opening aid (5) and a corresponding arcuate section of the second filter paper layer (3), which following the folding of the filter paper web (13) is located opposite the section with the opening aid (5), are cut into the filter paper web (13) without waste and, once the filter paper web (13) has been folded and the stamped formations have been provided in each individual filter paper insert (1), cutting out takes place in a second cutting station, the arcuate cut (18) which is still necessary in the introduction opening (4) crossing over the profiled cuts (14, 15) already provided in the region of the opening aid (5).

## Revendications

1. Procédé de fabrication de garnitures en papier filtrant (1) de type sachet comportant deux couches de papier filtrant (2, 3) superposées dont la surface de base est approximativement tronconique et l'ouverture de remplissage (4) s'étend en forme d'arc, l'une des couches de papier filtrant (2) étant pourvue, dans la zone de l'ouverture de remplissage (4), d'un accessoire d'ouverture (5) sous la forme d'une patte d'ouverture (6) saillante ou d'une découpe pour le pouce, en retrait, et les couches de papier filtrant (2, 3) étant formées dans une découpe d'un seul tenant et pliées le long d'un bord de pliage (8) formant un premier bord latéral (7) d'une garniture de papier filtrant (1), et étant ensuite réunies par gaufrage le long d'un bord de fond (9) et d'un deuxième bord latéral (10) situé face au bord de pliage (8), et les différentes garnitures de papier filtrant (1) d'une bande de papier filtrant (13) continue étant assemblées dans l'ordre indiqué précédemment, puis étant découpées dans la bande de papier filtrant (13), **caractérisé** en qu'avant le pliage de la bande de papier filtrant (13), dans un premier poste de coupe, le tronçon d'une couche de papier filtrant (2), formant la zone de l'accessoire d'ouverture (5), et un tronçon arqué correspondant de la deuxième couche de papier filtrant (3) situé, après le pliage de la bande de papier filtrant (13), face au tronçon avec l'accessoire d'ouverture (5), étant entaillés sans chute dans la bande de papier filtrant (13) et, après pliage de la bande de papier filtrant (13) et réalisation des empreintes, chaque garniture de papier filtrant (1) est découpée dans un deuxième poste de coupe, la découpe (18) en forme d'arc encore nécessaire ici croisant, dans la zone de l'ouverture de remplissage (4), la coupe (14, 15) se trouvant déjà dans la zone de l'auxiliaire d'ouverture (5).
